# FASCICULE DE BREVET EUROPEEN

(11) **EP 2 053 593 B1**
(45) Date de publication et mention de la délivrance du brevet: **22.05.2019**
(21) Numéro de dépôt: 08291001.9
(22) Date de dépôt: 23.10.2008
(51) Int. Cl.: G10K 11/165

(54) **COMPLEXE DE PROTECTION ACOUSTIQUE COMPRENANT UNE COUCHE POREUSE DENSIFIÉE**
SCHALLSCHUTZKOMPLEX, DER EINE VERDICHTETE PORÖSE SCHICHT UMFASST
ACOUSTIC PROTECTION COMPLEX COMPRISING A COMPREGNATED POROUS LAYER

(30) Priorité: 23.10.2007 FR 0707432
(43) Date de publication de la demande: 29.04.2009
(73) Titulaire: TREVES Products, Services & Innovation, 75008 Paris (FR)
(72) Inventeur: Lemaire, Dominique, 08190 Villiers Devant le Thour (FR)
(74) Mandataire: Sayettat, Julien Christian

(56) Documents cités:
- EP-A- 1 434 196
- WO-A-98/18657
- WO-A-2005/031699
- FR-A- 2 889 617
- FR-A1- 2 870 160
- US-A1- 2004 020 712

## Description

L'invention concerne un complexe de protection acoustique, notamment pour véhicule automobile.

Il est connu de réaliser un complexe de protection acoustique comprenant, disposés l'un sur l'autre, une couche souple poreuse d'absorption, un film étanche et une couche souple élastique, de sorte à former un système d'isolation de type masse/ressort présentant des propriétés d'absorption.

Dans un tel agencement, la couche poreuse présente une masse surfacique relativement faible, par exemple de l'ordre de 0,5 à 1 kg/m², ce qui limite les propriétés d'isolation du complexe, sachant que la masse surfacique du film n'intervient généralement que pour une faible part dans la composante «masse» du système masse/ressort.

L'invention a pour but de pallier cet inconvénient. On connait également du document FR-2 889 617 un complexe selon le préambule de la revendication 1. On connait également du document FR-2 870 160 un système de protection acoustique isolant et absorbant, de type masse-ressort poreux, ledit système comprenant une couche de matériau fibreux. La couche présente une variation de densité progressive suivant son épaisseur. La couche contient des flocons de mousse souple.

A cet effet, l'invention propose un complexe de protection acoustique selon la revendication 1.

La présence de telles particules permet d'obtenir une couche poreuse de plus haute densité, et donc de masse surfacique plus élevée pour une épaisseur donnée, ce qui améliore les propriétés d'isolation du complexe.

En outre, les particules étant dispersées au sein de la matrice, la couche poreuse conserve une porosité compatible avec les propriétés d'absorption attendues.

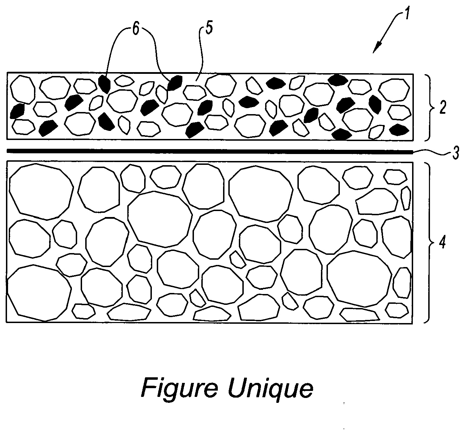

D'autres particularités et avantages de l'invention apparaîtront dans la description qui suit, faite en référence à la figure jointe qui est une représentation schématique en coupe d'un complexe selon l'invention.

En référence à la figure, on décrit un complexe 1 de protection acoustique, notamment pour véhicule automobile, comprenant, disposés successivement l'un sur l'autre, une couche souple poreuse 2 d'absorption, un film 3 étanche et une couche souple élastique 4, de sorte à former un système d'isolation de type masse/ressort présentant des propriétés d'absorption, ladite couche poreuse comprenant une matrice 5 poreuse au sein de laquelle sont dispersées des particules 6 de matériau dense de densité supérieure à celle de ladite matrice.

Par film 3 étanche, on entend notamment un film conférant au complexe formé par la couche poreuse 2 et ledit film une résistance au passage de l'air supérieure à 5000 N.S.m⁻³.

Selon une réalisation, afin d'obtenir des propriétés d'absorption satisfaisantes, la couche poreuse 2 présente une résistance au passage de l'air comprise entre 500 et 2500 N.s.m⁻³.

Selon une réalisation, afin de procurer des performances d'isolation satisfaisantes, la masse surfacique de la couche poreuse 2 est comprise entre 1 et 4 kg/m², et notamment entre 2 et 3 kg/m².

Selon une réalisation, le matériau dense des particules 6 est à base d'éthylène propylène diène monomère chargé en charge minérale, ledit matériau étant notamment issu du recyclage.

Selon une réalisation, la taille des particules 6 de matériau dense est comprise entre 2 et 6 mm, ceci afin de permettre une dispersion aisée au sein de la matrice 5, notamment lorsqu'elle est à base de flocons de mousse agglomérés.

Selon une réalisation, la matrice 5 est à base de mousse souple, notamment de masse surfacique comprise entre 300 et 1000 g/m².

En particulier, la matrice 5 peut être à base de flocons de mousse souple - notamment recyclés - agglomérés entre eux par un liant.

Selon une autre réalisation, la matrice 5 est à base de fibres, notamment de masse surfacique comprise entre 1000 et 1500 g/m².

Les fibres peuvent être à base de fibres thermoplastiques et/ou végétales (coton,...) liées entre elles par un liant.

Dans le cas d'une application en environnement chaud, par exemple à proximité d'un moteur ou d'une ligne d'échappement, on peut prévoir des fibres de verre liées entre elles par exemple par une résine thermodurcissable.

Dans une réalisation particulière, on peut prévoir que la matrice 5 comprenne des fibres non liantes et des fibres liantes thermo fusibles enchevêtrées entre elles, lesdites fibres liantes amalgamant lesdites fibres non liantes et des particules 6 dispersées.

Selon une réalisation, le film 3 est à base de matériau thermoplastique. En particulier, le film 3 peut être à base de polyuréthanne d'épaisseur comprise entre 20 et 70 microns environ et de masse surfacique de l'ordre de 20 à 70 g/m², donc négligeable par rapport à celle de la couche poreuse 2, ce qui justifie la nécessité de densifier ladite couche poreuse par ajout de particules 6 de matériau dense.

Avec un tel film 3 à base de matériau thermoplastique, on peut prévoir une couche élastique 4 à base de mousse souple ou de fibres, lesdites fibres étant conformées notamment sous forme de feutre.

Selon une autre réalisation, le film 3 est formé par imprégnation d'une partie de l'épaisseur de la couche poreuse 2 par la couche élastique 4 prévue à base de mousse, notamment de polyuréthanne, surmoulant ladite couche poreuse.

Dans ce dernier cas, la partie d'épaisseur de couche poreuse 2 imprégnée par la mousse de la couche élastique 4 est de préférence la plus faible possible, de sorte à laisser une épaisseur maximale de couche poreuse 2 non imprégnée, ceci afin de conférer à ladite couche poreuse des propriétés d'absorption optimisées. La partie imprégnée doit toutefois être suffisante pour permettre de réaliser l'étanchéité attendue.

Selon une réalisation, la partie de couche poreuse 2 imprégnée par la mousse de la couche élastique 4 représente généralement une fraction inférieure à 25% de l'épaisseur de ladite couche poreuse, et notamment inférieure à 20%.

Le terme « généralement » employé ci-dessus signifie que ponctuellement, certaines zones peuvent toutefois présenter une imprégnation plus importante, notamment les zones comprimées, mais que, sur la majeure partie du complexe 1, l'imprégnation est telle que décrite ci-dessus.

On peut envisager que la partie de couche poreuse 2 imprégnée par la mousse de la couche élastique 4 représente une fraction beaucoup plus faible que celles indiquées avant, par exemple de l'ordre de 5 % ou moins encore, comme ce peut être le cas lorsque la matrice 5 est à base de flocons de mousse agglomérés.

La seule contrainte est que la mousse de la couche élastique 4 pénètre suffisamment pour assurer l'étanchéité attendue et une cohésion suffisante entre les couches poreuse 2 et élastique 4 par l'intermédiaire du film 3 formé par imprégnation.

Dans un exemple de réalisation, la couche poreuse 2 présente une épaisseur générale de 7 mm, avec des zones comprimées localisées de 3 à 4 mm d'épaisseur, l'épaisseur de la partie imprégnée étant de 1 mm environ.

## Revendications

1. Complexe (1) de protection acoustique comprenant, disposés successivement l'un sur l'autre, une couche souple poreuse (2) d'absorption, un film (3) étanche et une couche souple élastique (4), de sorte à former un système d'isolation de type masse/ressort présentant des propriétés d'absorption, ladite couche poreuse comprenant une matrice (5) poreuse au sein de laquelle sont dispersées des particules (6) de matériau dense de densité supérieure à celle de ladite matrice, ledit complexe étant **caractérisé en ce que** la matrice (5) est à base de flocons de mousse souple agglomérés entre eux par un liant.

2. Complexe selon la revendication 1, **caractérisé en ce que** la couche poreuse (2) présente une résistance au passage de l'air comprise entre 500 et 2500 N.s.m-³.

3. Complexe selon l'une quelconque des revendications 1 ou 2, **caractérisé en ce que** la masse surfacique de la couche poreuse (2) est comprise entre 1 et 4 kg/m², et notamment entre 2 et 3 kg/m².

4. Complexe selon l'une quelconque des revendications 1 à 3, **caractérisé en ce que** le matériau dense des particules (6) est à base d'éthylène propylène diène monomère chargé en charge minérale.

5. Complexe selon l'une quelconque des revendications 1 à 4, **caractérisé en ce que** film (3) est à base de matériau thermoplastique.

6. Complexe selon l'une quelconque des revendications 1 à 4, **caractérisé en ce que** le film (3) est formé par imprégnation d'une partie de l'épaisseur de la couche poreuse (2) par la couche élastique (4) prévue à base de mousse, notamment de polyuréthanne, surmoulant ladite couche poreuse.

7. Complexe selon la revendication 6, **caractérisé en ce que** la partie de couche poreuse (2) imprégnée par la mousse de la couche élastique (4) représente généralement une fraction inférieure à 25% de l'épaisseur de ladite couche poreuse, et notamment inférieure à 5%.

## Patentansprüche

1. Schallschutzkomplex (1), umfassend, angeordnet aufeinanderfolgend übereinander, eine poröse flexible Absorptionsschicht (2), eine dichte Folie (3) und eine elastische flexible Schicht (4), so dass ein Isolationssystem vom Typ Masse/Feder gebildet wird, das Absorptionseigenschaften aufweist, wobei die poröse Schicht eine poröse Matrix (5) umfasst, in welcher dichte Materialpartikel (6) verteilt sind mit einer Dichte über der der Matrix, wobei der Komplex **dadurch gekennzeichnet ist, dass** die Matrix (5) auf der Basis von flexiblen Schaumstofflocken ist, die untereinander durch ein Bindemittel agglomeriert sind.

2. Komplex nach Anspruch 1, **dadurch gekennzeichnet, dass** die poröse Schicht (2) einen Luftdurchgangswiderstand aufweist, der zwischen 500 und 2500 N.s.m⁻³ liegt.

3. Komplex nach einem der Ansprüche 1 oder 2, **dadurch gekennzeichnet, dass** die flächenbezogene Masse der porösen Schicht (2) zwischen 1 und 4 kg/m² und insbesondere zwischen 2 und 3 kg/m² liegt.

4. Komplex nach einem der Ansprüche 1 bis 3, **dadurch gekennzeichnet, dass** das dichte Material der Partikel (6) auf der Basis von Ethylen-Propylen-Dien-Monomer mit mineralischer Charge ist.

5. Komplex nach einem der Ansprüche 1 bis 4, **dadurch gekennzeichnet, dass** die Folie (3) auf der Basis von thermoplastischem Material ist.

6. Komplex nach einem der Ansprüche 1 bis 4, **dadurch gekennzeichnet, dass** die Folie (3) durch Imprägnieren eines Teils der Stärke der porösen Schicht (2) durch die elastische Schicht (4) gebildet ist, die auf der Basis von Schaumstoff vorgesehen ist, insbesondere von Polyurethan, welche die poröse Schicht überformt.

7. Komplex nach Anspruch 6, **dadurch gekennzeichnet, dass** der Teil poröser Schicht (2), der durch den Schaumstoff der elastischen Schicht (4) imprägniert ist, im Allgemeinen einen Anteil von unter 25 % der Stärke der porösen Schicht und insbesondere von unter 5 % darstellt.

## Claims

1. Acoustic protection complex (1) comprising, arranged successively one on top of the other, a porous flexible absorption layer (2), a sealed film (3) and an elastic flexible layer (4), so as to form a mass-spring type insulation system having absorption properties, said porous layer comprising a porous matrix (5) within which are dispersed dense material particles (6) of density greater than that of said matrix, said complex being **characterised in that** the matrix (5) is based on flexible foam flakes agglomerated to one another by a binding agent.

2. Complex according to claim 1, **characterised in that** the porous layer (2) has a resistance to the passage of air between 500 and 2500 N.s.m-³.

3. Complex according to any one of claims 1 or 2, **characterised in that** the surface mass of the porous layer (2) is between 1 and 4kg/m², and in particular between 2 and 3kg/m².

4. Complex according to any one of claims 1 to 3, **characterised in that** the dense material of the particles (6) is based on ethylene propylene diene monomer filled with mineral filler.

5. Complex according to any one of claims 1 to 4, **characterised in that** the film (3) is based on thermoplastic material.

6. Complex according to any one of claims 1 to 4, **characterised in that** the film (3) is formed by impregnating of a portion of the thickness of the porous layer (2) by the elastic layer (4) provided based on foam, in particular polyurethane, overmoulding said porous layer.

7. Complex according to claim 6, **characterised in that** the portion of porous layer (2) impregnated by the foam of the elastic layer (4) generally represents a fraction less than 25% of the thickness of said porous layer, and in particular, less than 5%.
